# FASCICULE DE BREVET EUROPEEN

(11) **EP 4 481 258 B1**
(45) Date de publication et mention de la délivrance du brevet: **25.02.2026**
(21) Numéro de dépôt: 24182544.7
(22) Date de dépôt: 17.06.2024
(51) Int. Cl.: F16L 59/14

(54) **DISPOSITIF D'ISOLATION THERMIQUE**
WÄRMEDÄMMVORRICHTUNG
THERMAL INSULATION DEVICE

(30) Priorité: 23.06.2023 FR 2306577
(43) Date de publication de la demande: 25.12.2024
(73) Titulaire: Aris, 76133 Epouville (FR)
(72) Inventeur: CRASTE, Antonin, 76620 Le Havre (FR); HERSON, Daniel, 76111 Yport (FR); DAVID, Matthieu, 76620 Le Havre (FR)
(74) Mandataire: Loyer & Abello

(56) Documents cités:
- FR-A1- 2 321 346
- KR-B1- 101 613 504
- US-A- 5 068 218
- US-B1- 6 391 469

## Description

### Domaine technique

L'invention se rapporte au domaine de l'isolation thermique et notamment à l'isolation thermique d'enceintes ou encore des systèmes de transport ou de production de chaleur.

Sans s'y limiter, l'invention trouve une application particulière dans les procédés industriels mis en oeuvre dans l'industrie nucléaire.

### Arrière-plan technologique

L'isolation thermique d'un système physique consiste à réduire les échanges ou transferts thermiques entre l'intérieur et l'extérieur de ce système physique.

Par exemple, le système physique peut être une enceinte fermée, des tuyauteries, des équipements ou appareils.

On distingue trois types de transferts ou d'échanges thermiques :
- la conduction, due à la diffusion progressive de l'agitation thermique dans la matière ;
- la convection, transfert thermique qui accompagne les déplacements macroscopiques de la matière ;
- le rayonnement, qui correspond à la propagation de photons.

Généralement, les trois types de transferts coexistent néanmoins suivant les conditions thermodynamiques du système, les proportions respectives des trois types de transferts peuvent varier.

Afin de réduire les échanges thermiques entre l'intérieur et l'extérieur du système physique, il est courant d'équiper le système physique à isoler d'un ou plusieurs dispositifs d'isolation thermique conçus selon la réduction d'échange thermique souhaitée, le ou les types de transferts thermiques à limiter en priorité, la géométrie du système à isoler et d'autres contraintes propres au système à isoler ou à son environnement.

Selon un exemple, US-B-6391469 décrit un panneau multicouche d'isolation thermique ou sonore, ou de blindage fait de couches de feuilles de métal ondulées, avec interposition d'une tôle plane entre chaque paire de tôles ondulées, pour l'isolation thermique réfléchissante dans des applications à haute température.

Selon un exemple, KR 101 613 504 B1 décrit un dispositif d'isolation en matériau métallique qui est installé sur la circonférence extérieure de toutes sortes de tuyaux installés dans une centrale nucléaire, etc.

Selon un exemple, US 6 391 469 B1 décrit des panneaux multicouches en feuille métallique pour l'isolation ou le blindage thermique ou acoustique comprenant deux ou plusieurs couches de feuille métallique ondulée ou de tôle métallique dans lesquelles une couche de feuille métallique plate ou de tôle métallique est positionnée entre chaque paire de couches ondulées.

Selon un exemple, US 5 068 218 A décrit un catalyseur métallique en nid d'abeilles ayant un corps de support de catalyseur métallique grossièrement cylindrique formé en enroulant en spirale et en alternance une première couche de tôle à grand pas d'onde et une seconde couche de tôle à petit pas d'onde de manière empilée de manière à former un grand nombre de conduits d'écoulement de gaz en nid d'abeilles.

Selon un exemple, FR 2 321 346 A1 décrit un procédé de production de pièces traversées par des canaux.

### Résumé

Une idée à la base de l'invention vise à proposer un dispositif d'isolation efficace vis-à-vis des trois types de transfert thermiques.

De plus, une autre idée à la base de l'invention est de limiter les risques d'endommagement du système physique à isoler.

Selon un mode de réalisation, l'invention fournit un dispositif d'isolation thermique comprenant :
- une enceinte métallique, et,
- plusieurs feuilles métalliques empilées successivement dans une direction d'épaisseur de l'enceinte métallique, les feuilles métalliques comprenant :
   ∘ des feuilles métalliques à reliefs;
   ∘ des feuilles métalliques de support disposées entre les feuilles métalliques à reliefs ;
chaque feuille métallique à reliefs présentant une pluralité de premiers reliefs présentant une première hauteur selon la direction d'épaisseur, les premiers reliefs étant en appui contre une feuille métallique de support adjacente à la feuille métallique à reliefs, chaque feuille métallique à reliefs présentant une pluralité de deuxièmes reliefs présentant une deuxième hauteur selon la direction d'épaisseur; la première hauteur étant supérieure à la deuxième hauteur.

Grâce à ces caractéristiques, le dispositif d'isolation thermique permet de limiter les trois différents types de transfert thermique (conduction, convection et rayonnement).

La première pluralité de reliefs d'une feuille métallique à reliefs permettent de limiter le contact avec les feuilles métalliques de support adjacentes au sein de l'enceinte.

Ce faisant, la première pluralité de reliefs permet de limiter le transfert d'énergie thermique par conduction. Le transfert thermique par conduction est d'autant plus limité que la section transversale des premiers reliefs est faible.

La seconde pluralité de reliefs d'une feuille métallique à reliefs permettent de limiter le mouvement de l'air au sein d'un espace compris entre une feuille métallique à reliefs et une feuille métallique de support adjacentes.

Ce faisant, la seconde pluralité de reliefs permet de limiter le transfert d'énergie thermique par convection au sein des espaces comprenant de l'air compris entre les feuilles métalliques à reliefs et les feuilles métalliques de support .

Enfin, le ou les matériaux métalliques des feuilles métalliques confèrent une réflectivité élevée, notamment dans le domaine des infra-rouge, aux feuilles métalliques.

Ce faisant, les feuilles métalliques permettent de limiter le transfert d'énergie thermique par rayonnement.

Une direction d'épaisseur de l'enceinte est une direction normale à une paroi de l'enceinte.

La hauteur des reliefs est mesurée dans une direction normale à une surface moyenne de chaque feuille métallique à reliefs.

La hauteur des reliefs considérée est la distance crête à crête, ou de sommet à sommet, entre deux reliefs de même type (premier ou deuxième) situés de part et d'autre d'une feuille métallique à relief.

De plus, hormis les éléments métalliques le composant, le dispositif comprend uniquement de l'air ou un autre gaz ambiant. Le dispositif ne comprend pas de laine de verre ou autre matériau solide susceptible d'endommager le système à isoler en cas d'incident.

Selon des modes de réalisation, un tel dispositif d'isolation thermique peut comporter une ou plusieurs des caractéristiques suivantes.

Selon un mode de réalisation, la pluralité de premiers reliefs fait saillie par rapport aux deux faces de ladite feuille métallique à reliefs. Ainsi, un écart correspondant à la hauteur des premiers reliefs est maintenu entre la feuille métallique à reliefs et deux feuilles métalliques de support disposées de part et d'autre de la feuille métallique à reliefs.

Selon un mode de réalisation, la pluralité de seconds reliefs fait saillie par rapport aux deux faces de ladite feuille métallique à reliefs. La convection peut être freinée par les seconds reliefs de part et d'autre de la feuille métallique à reliefs ce qui limite le transfert thermique par convection.

Selon un mode de réalisation, la pluralité de premiers reliefs est localisée à la surface de la feuille métallique à reliefs selon un premier arrangement spatial périodique.

Ainsi, les points de contact entre deux feuilles métalliques consécutives sont distribués régulièrement, ce qui favorise une performance d'isolation thermique uniforme.

Selon un mode de réalisation, la pluralité de deuxièmes reliefs est localisée à la surface de la feuille métallique à reliefs selon un deuxième arrangement spatial périodique.

Ainsi, les reliefs freinant les flux d'air sont distribués régulièrement au sein de la couche d'air contenue entre deux feuilles métalliques ce qui favorise une performance d'isolation thermique uniforme.

Selon un mode de réalisation, la pluralité de premiers reliefs forme des protubérances réparties à la surface de la feuille métallique à reliefs selon un arrangement spatial périodique défini selon une première et une seconde périodes spatiales ; la première période spatiale étant définie dans une première direction d'un plan moyen de la surface de la feuille métallique à reliefs ; et la seconde période spatiale étant définie dans une seconde direction du plan moyen.

Ainsi, le contact entre deux feuilles métalliques consécutives a lieu au niveau de protubérances localisées, pouvant être assez ponctuelles, c'est-à-dire présenter une petite section transversale. A la différence d'une ondulation, une telle protubérance ne s'étend pas continûment le long d'une ligne. Cela permet de limiter au maximum le transfert thermique par conduction entre deux feuilles métalliques consécutives.

La première et la seconde directions sont de préférence perpendiculaires. Cependant, il est possible que la première et la seconde directions soient sécantes et non perpendiculaires.

Selon un mode de réalisation, la pluralité de seconds reliefs forme des protubérances réparties à la surface de la feuille métallique à reliefs selon un arrangement spatial périodique défini selon une troisième et une quatrième périodes spatiales ; la troisième période spatiale étant définie dans la première direction du plan moyen de la surface de la feuille métallique à reliefs ; et la quatrième période spatiale étant définie dans la seconde direction du plan moyen.

De préférence, une différence entre la première hauteur et la deuxième hauteur est supérieure ou égale à 4 mm.

Selon un mode de réalisation, la première hauteur est supérieure à 6 mm et inférieure à 30 mm. Par exemple, la première hauteur peut être comprise entre 7 et 20 mm, voire entre 12 et 16,5 mm. Autrement dit, la distance crête à crête, ou de sommet à sommet, entre deux premiers reliefs situés sur l'une et l'autre face d'une feuille métallique à relief est supérieure à 6 mm et inférieure à 30 mm. Elle peut être comprise entre 7 et 20 mm, voire entre 12 et 16,5 mm.

La première hauteur pilote l'espacement entre les feuilles métalliques successives et contribue qualitativement à diminuer le transfert par conduction et par rayonnement lorsque la première hauteur augmente. Toutefois, la quantité d'air contenue entre deux feuilles métalliques augmente aussi lorsque première hauteur augmente, ce qui pourrait favoriser le transfert convectif. La plage d'épaisseur entre 6 mm et 30 mm assure un bon compromis pour réduire le transfert thermique global entre deux métalliques consécutives.

Selon un mode de réalisation, la deuxième hauteur est comprise entre 3 et 15 mm. De même, la deuxième hauteur correspond à la distance crête à crête, ou de sommet à sommet, entre deux deuxième reliefs situés de part et d'autre d'une feuille métallique à reliefs.

Ainsi, les flux d'air engendré par le gradient de température entre deux feuilles métalliques consécutives sont freinés ce qui permet de limiter le transfert thermique par convection entre deux feuilles métalliques consécutives.

Selon un mode de réalisation, la feuille métallique de support est une feuille métallique plane ou une feuille métallique gaufrée. Dans ce dernier cas, la feuille métallique gaufrée peut présenter un gaufrage obtenu par emboutissage.

Par exemple, ce gaufrage peut être obtenu par une pressage de deux matrices de formage d'une machine de presse contre une feuille métallique plane.

Grâce au gaufrage, la feuille de support contribue aussi à limiter les transfert thermiques par convection entre deux feuilles métalliques consécutives.

La feuille métallique gaufrée comprend alors une unique pluralité de reliefs à sa surface. De plus, la hauteur des gaufrages obtenus par emboutissage est inférieure à 5 mm

Selon un mode de réalisation, la feuille métallique à relief est réalisée en acier inoxydable.

Ainsi, les feuilles métalliques à relief présentent une excellente stabilité dans la durée, peuvent être travaillées à froid et possèdent un fort coefficient de réflectivité pour le rayonnement thermique.

Selon un mode de réalisation, la feuille métallique de support est réalisée en acier inoxydable.

Ainsi, les feuilles métalliques de support présentent une excellente stabilité dans la durée, peuvent être travaillées à froid et possèdent un fort coefficient de réflectivité pour le rayonnement thermique.

Selon un mode de réalisation, l'enceinte métallique est également réalisée en acier inoxydable. De même, l'enceinte métallique présente une excellente stabilité dans la durée et peut être travaillée à froid tout en possédant un fort coefficient de réflectivité pour le rayonnement thermique.

Selon un mode de réalisation, une épaisseur de la feuille métallique à relief est comprise entre 0,01 et 0,10 millimètres, par exemple égale à 0,05 mm. Selon un mode de réalisation, une épaisseur de la feuille métallique de support est comprise entre 0,01 et 0,10 millimètres, par exemple égale à 0,05 mm.

Ainsi, un nombre élevé de feuilles métalliques consécutives peut être employé sans accroître excessivement le poids du dispositif d'isolation, pour segmenter finement l'espace intérieur de l'enceinte et ainsi minimiser la convection thermique.

Selon un mode de réalisation particulier, l'épaisseur des parois de l'enceinte est comprise entre 0,4 et 0,8 mm

Selon un mode de réalisation, l'enceinte métallique comprend une ou plusieurs flasques ajourés en épaisseur.

Ces flasques correspondent aux portions ou parois de l'enceinte devant être en contact avec d'autres dispositifs d'isolation juxtaposés, par opposition aux portions ou parois de l'enceinte tournées vers l'extérieur ou vers le système physique à isoler. L'épaisseur des flaques est ainsi inférieure aux autres portions de l'enceinte, ce qui permet de limiter les ponts thermiques occasionnées par ces parois qui relient les portions de l'enceinte tournées vers l'extérieur aux portions de l'enceinte tournées vers le système physique à isoler. Par exemple, une épaisseur de chaque flasque est de 0,1 mm.

Selon un mode de réalisation, les feuilles métalliques à reliefs sont soudées à au moins une paroi de l'enceinte métallique. De préférence, une ou chaque feuille métallique à reliefs est soudée par pointage à l'enceinte métallique. La soudure par pointage peut être réalisée sur toute la circonférence de la feuille métallique ou au contraire sur seulement certaines portions de la circonférence, par exemple les portions correspondant à deux faces opposées de l'enceinte métallique.

Selon un mode de réalisation, les feuilles métalliques de support sont soudées à au moins une paroi de l'enceinte métallique. De préférence, une ou chaque feuille métallique de support est soudée par pointage à l'enceinte métallique. La soudure par pointage peut être réalisée sur toute la circonférence de la feuille métallique ou au contraire sur seulement certaines portions de la circonférence, par exemple les portions correspondant à deux faces opposées de l'enceinte métallique.

Selon un mode de réalisation, le dispositif comprend de 5 à 30 feuilles métalliques, de préférence entre 10 et 20 feuilles métalliques.

Le nombre de feuilles métalliques peut dépendre de la performance d'isolation thermique recherchée.

Il peut aussi dépendre de l'espace disponible autour du système physique à isoler ou encore du poids maximal à respecter pour le dispositif d'isolation. Selon une réalisation ce point maximal est de 25 kg par dispositif d'isolation.

Ainsi, ces gammes permettent d'obtenir un bon compromis entre la performance d'isolation thermique, les dimensions et le poids de l'enceinte et le coût du dispositif thermique.

Selon un mode de réalisation, le dispositif d'isolation thermique présente une épaisseur selon la direction d'épaisseur de l'enceinte comprise entre 30 et 250mm.

Selon un mode de réalisation, l'invention fournit aussi une installation destinée à la production d'énergie comprenant au moins un réacteur nucléaire et un dispositif d'isolation thermique du type précité agencé pour isoler un composant du réacteur nucléaire, par exemple une canalisation de vapeur ou une cuve.

Selon un mode de réalisation, l'invention fournit un procédé de fabrication d'un dispositif d'isolation thermique, le procédé comprenant :
former une pluralité de feuilles métalliques à reliefs, chacune desdites feuilles métalliques à reliefs comprenant une pluralité de premiers reliefs et une pluralité de seconds reliefs à sa surface et étant obtenue par pressage de deux matrices de formage contre une feuille métallique plane, les matrices de formage comprenant une pluralité de premiers picots et une pluralité de seconds picots, une hauteur des premiers picots étant supérieure à une hauteur des seconds picots ; la hauteur des premiers picots déterminant la hauteur des premiers reliefs ; et la hauteur des seconds picots déterminant la hauteur des seconds reliefs de sorte que une hauteur des premiers reliefs soit supérieure à une hauteur des seconds reliefs ;
au sein d'une enceinte métallique, empiler successivement dans une direction d'épaisseur de l'enceinte métallique, les feuilles métalliques à reliefs et une pluralité de feuilles métalliques de support de sorte que les feuilles métalliques de support soit disposées entre les feuilles métalliques à reliefs.

La hauteur des picots est mesurée par rapport au plan de la matrice considérée.

Selon un mode de réalisation, les premiers picots sont répartis au sein des matrices de formage selon un premier arrangement spatial périodique de sorte que les premiers reliefs soient localisés à la surface de la feuille métallique à reliefs selon ce premier arrangement spatial périodique.

Ainsi, les premiers reliefs de la feuille métallique à reliefs formée sont répartis au sein de celle-ci selon des arrangements spatiaux périodiques déterminés par les arrangements périodiques des premiers picots.

Selon un mode de réalisation, les seconds picots sont répartis au sein des matrices de formage selon un second arrangement spatial périodique de sorte que les seconds reliefs soient localisés à la surface de la feuille métallique à reliefs selon ce second arrangement spatial périodique.

Ainsi, les seconds reliefs de la feuille métallique à reliefs formée sont répartis au sein de celle-ci selon des arrangements spatiaux périodiques déterminés par les arrangements périodiques des seconds picots.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig.1] La figure 1 représente une vue en coupe des feuilles métalliques d'un dispositif d'isolation thermique droit.
[Fig.2] La figure 2 est une vue en coupe des feuilles métalliques d'un dispositif d'isolation thermique courbe.
[Fig.3] La figure 3 illustre un dispositif d'isolation thermique courbe, susceptible d'isoler un tuyau d'une tuyauterie.
[Fig.4] La figure 4 illustre également un dispositif d'isolation thermique courbe, susceptible d'isoler un tuyau d'une tuyauterie.
[Fig. 5] La figure 5 illustre une machine presse comprenant une matrice de formage inférieure et une matrice de formage supérieure comprenant chacune des picots.
[Fig. 6] La figure 6 illustre une première matrice de formage comprenant des picots répartis selon un premier exemple d'arrangement périodique.
[Fig. 7] La figure 7 illustre une seconde matrice de formage comprenant des picots répartis selon un second exemple d'arrangement périodique.
[Fig.8] La figure 8 illustre une feuille métallique à reliefs comprenant une pluralité de premiers reliefs et une pluralité de seconds reliefs.
[Fig.9] La figure 9 illustre une étape de fabrication d'un dispositif d'isolation thermique selon un premier exemple de réalisation : l'empilement d'une feuille métallique à reliefs au sein de l'enceinte d'un dispositif d'isolation thermique. Les pluralités de premiers et seconds reliefs sont répartis selon un premier exemple d'arrangement périodique.
[Fig. 10] La figure 10 illustre une autre étape de fabrication du dispositif thermique selon le premier exemple de réalisation : l'empilement d'une feuille métallique de support au sein de l'enceinte du dispositif d'isolation thermique.
[Fig. 11] La figure 11 illustre également l'empilement d'une feuilles métallique au sein de l'enceinte d'un dispositif d'isolation thermique selon un second exemple de réalisation. Les pluralités de premiers et seconds reliefs sont répartis selon un second exemple d'arrangement périodique.
[Fig. 12] La figure 12 illustre également l'empilement d'une feuilles métallique de support au sein de l'enceinte d'un dispositif d'isolation thermique selon le second exemple de réalisation.
[Fig.13] La figure 13 illustre une enceinte à isoler comprenant plusieurs dispositifs d'isolation thermique.

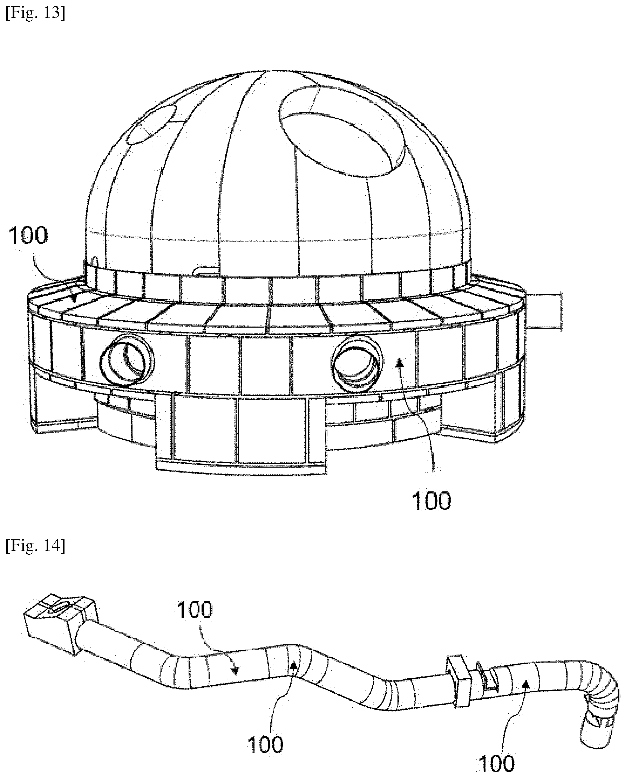

[Fig.13] La figure 14 illustre une portion de tuyauterie comprenant plusieurs tuyaux à isoler comprenant plusieurs dispositifs d'isolation thermique.

### Description des modes de réalisation

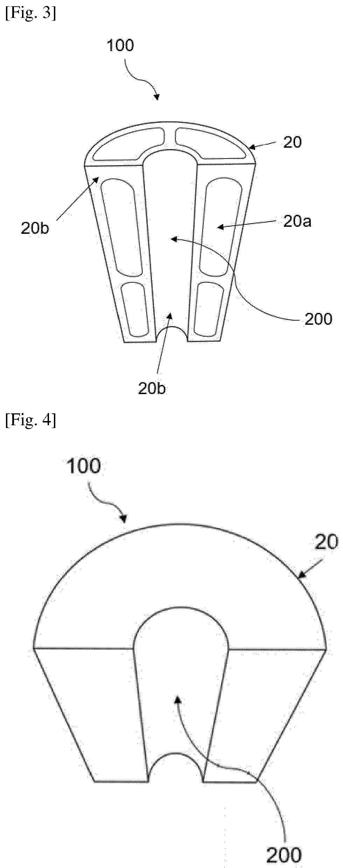

Les figures 3 et 4 illustrent un dispositif d'isolation thermique 100 courbe selon un exemple de réalisation.

Le dispositif comprend une enceinte métallique 20 à l'intérieur de laquelle sont empilées des feuilles métalliques à reliefs 1 et des feuilles métalliques de support 2 (non visibles aux figures 3 et 4). Les feuilles métalliques 1 et 2 sont fixées, par exemple par soudure, aux parois internes de l'enceinte métallique 20.

La soudure peut être continue ou au contraire uniquement sur quelques parties de la circonférence de chaque feuille métallique 1 ou 2. Selon un mode de réalisation, la soudure est une soudure par pointage.

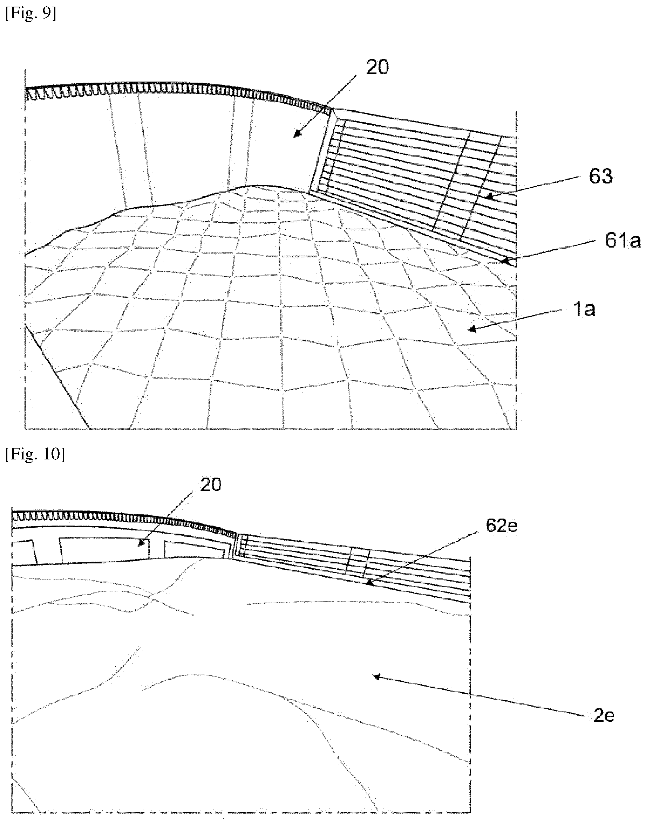

Toute géométrie - forme et dimensions - est envisageable pour l'enceinte 20 en fonction de la géométrie du système qu'elle doit isoler. Les figures 9 à 12 illustrent des enceintes 20 aux formes et aux dimensions différentes entre elles et différentes de l'exemple de réalisation des figures 3 et 4. De plus, les figures 13 et 14 illustrent des systèmes physiques à isoler présentent des formes variées tant rectilignes que courbées et aux dimensions également variées. L'enceinte 20 du ou des dispositifs d'isolation thermique susceptible d'équiper de tels dispositifs peuvent donc également être de formes et de dimensions variées

Comme illustré à la figure 3, l'enceinte 20 peut comprendre un corps d'enceinte 20b et des flasques ajourés 20a. Le corps d'enceinte 20b est une coque en forme de demi-cylindre présentant un espace central 200. L'espace central 200 est adapté pour recevoir un tuyau à isoler thermiquement.

Les flasques ajourés 20a correspond à des portions de parois présentant une épaisseur réduite par rapport au reste de l'enceinte métallique 20.

L'enceinte 20 est constituée de métaux ou d'alliage de métaux. Ainsi, l'enceinte 20 bénéficie des propriétés réflectives des métaux ce qui permet de réduire les transferts de chaleur par rayonnement.

Selon un mode de réalisation, l'enceinte 20 est réalisée en acier inoxydable, aussi appelé acier inox ou inox. L'acier inoxydable ou inox est un acier au sens de la norme EN 10020 contenant au minimum 10,5 % de chrome et au maximum 1,2 % de carbone d'après cette norme EN 10020.

Tout type d'inox au sens de la norme EN 10020 peut être utilisé pour réaliser l'enceinte 20. Les aciers inoxydables présentent une mauvaise conductivité thermique. Ainsi, l'enceinte 20 permet de réduire le transfert thermique par conduction. De plus, la plupart des différents types d'acier inoxydables sont faciles à découper, à plier, à déformer, à souder ce qui permet de fabriquer facilement l'enceinte 20.

Selon un exemple de réalisation, l'enceinte 20 est réalisée en inox 304.

Outre les avantages généraux des aciers inoxydables présentés ci-dessus, l'inox 304 peut être travaillé à froid, présente une très bonne malléabilité et sa conductivité électrique et thermique s'avère peu élevée pour un métal : 16.2 W/m·K à 100 °C et 21.5 W/m·K à 500 °C. L'enceinte 20 bénéficie de ses propriétés physiques et permet ainsi de réduire le transfert thermique par conduction.

Par ailleurs, l'épaisseur des parois de l'enceinte métallique 20 est comprise entre 0,5 et 0,8 mm. Lorsque l'enceinte présente un corps d'enceinte 20b et des flasques ajourés 20a, ces derniers ont une épaisseur de 0,1 mm. Une telle épaisseur permet de limiter un pont thermique entre les parois de l'enceinte métallique 20 en contact avec le système physique à isoler et les parois de l'enceinte métallique 20 en contact avec l'extérieur.

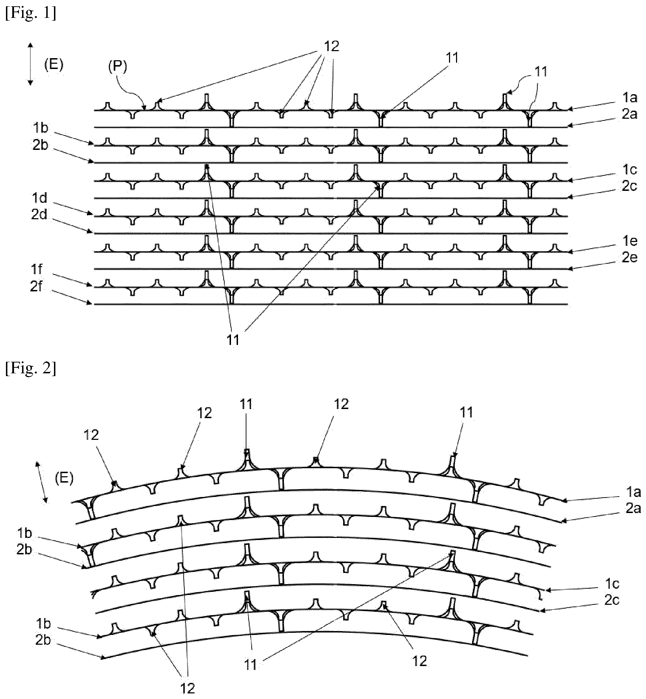

Les figures 1 et 2 illustrent schématiquement l'empilement au sein de l'enceinte 20 des feuilles métalliques 1 et 2. Les feuilles métalliques 1 et 2 sont empilées les unes sur les autres dans la direction d'épaisseur E de l'enceinte 20 (non représentée aux figures 1 et 2). Les feuilles métalliques 1 et 2 sont fixées aux parois de l'enceinte 20, par exemple par soudure.

L'empilement de feuilles métalliques 1 et 2 peut comprendre autant de feuilles métalliques 1 et 2 que nécessaire selon la performance d'isolation souhaitée. En pratique, le nombre de feuilles métalliques 1 et 2 empilées peut dépendre de la température du système physique à isoler thermiquement, de la performance d'isolation thermique souhaitée et/ou de la géométrie de l'enceinte 20. La géométrie de l'enceinte 20 peut elle dépendre de l'espace disponible dans l'environnement de ce système.

Ainsi, à titre d'illustration, six feuilles métalliques à reliefs 1 (1a à 1f) et six feuilles métalliques de support 2 (2a à 2f), soit douze feuilles métalliques 1 et 2, sont empilées les unes sur les autres à la figure 1. A la figure 2, quatre feuilles métalliques à reliefs 1 et quatre feuille métallique de support 2, soit huit feuilles métalliques 1 et 2, sont empilées.

Les feuilles métalliques 1 et 2 sont constituées de métaux ou d'alliage de métaux comme l'enceinte 20. De manière analogue à l'enceinte 20, les feuilles métalliques 1 et 2 bénéficient des propriétés réflectives des métaux ce qui permet de réduire les transferts de chaleur par rayonnement.

Selon un mode de réalisation, les feuilles métalliques 1 et 2 sont réalisées en acier inoxydable, aussi appelé acier inox ou inox.

De même, tout type d'inox au sens de la norme EN 10020 peut être utilisé pour réaliser les feuilles métalliques 1 et 2. Les aciers inoxydables présentent une relativement mauvaise conductivité thermique. Ainsi, les feuilles métalliques 1 et 2 permettent de réduire le transfert thermique par conduction par rapport à d'autres métaux. De plus, la plupart des différents types d'acier inoxydables sont faciles à découper, à plier, à déformer, à souder ce qui permet de fabriquer facilement les feuilles métalliques 1 et 2 comme cela sera décrit plus en détails ci-après.

Selon un exemple de réalisation, les feuilles métalliques 1 et 2 sont réalisées en inox 304.

De même, outre les avantages généraux des aciers inoxydables présentés ci-dessus, les feuilles métalliques 1 et 2 bénéficient de ses propriétés physiques et permet ainsi réduire le transfert thermique par conduction.

Par ailleurs, les feuilles métalliques 1 et 2 ont une épaisseur comprise entre 0.01 et 0.10 millimètres, par exemple de 0.05 mm. Une telle épaisseur permet de manipuler les feuilles métalliques 1 et 2 sans les briser et notamment pendant l'étape de formage des pluralités de reliefs.

Les feuilles métalliques à reliefs 1 comprennent à leur surface une pluralité de premiers reliefs 11 et une pluralité de seconds reliefs 12 comme illustré aux figures 1 et 2.

Par exemple, à la figure 1, la feuille métallique à reliefs 1a comprend une pluralité de premiers reliefs 11 et une pluralité de seconds reliefs 12. Comme illustré, la pluralité de premiers reliefs 11 présente une hauteur, selon la direction d'épaisseur E, supérieure à la hauteur de la pluralité des seconds reliefs 12. Autrement dit, la distance entre deux sommets de premiers reliefs 11 situés de part et d'autre d'une feuille métallique est supérieure à la distance entre deux sommets de deuxièmes reliefs 12 situés de part et d'autre de cette feuille métallique.

Selon un mode de réalisation, la pluralité de premiers reliefs 11 présente chacun la même hauteur. Par exemple, la hauteur des premiers reliefs 11 est supérieur à 6 mm. Cette hauteur correspond à la distance crête à crête, ou de sommet à sommet, entre deux reliefs situés de part et d'autre.

De plus, selon un mode de réalisation, la feuille métallique 1a présente sur ses deux faces une pluralité de premiers reliefs 11, de même hauteur ou non, comme illustré aux figures 1 et 2. Autrement dit, la pluralité de premiers reliefs 11 fait saillie par rapport aux deux faces de la feuille métallique à reliefs.

Selon un mode de réalisation préféré, la feuille métallique 1a présente sur ses deux faces une pluralité de premiers reliefs 11 de même hauteur supérieure à 6 mm, par exemple de 12,5 mm ou de 16,5 mm. Ainsi, deux sommets de premiers reliefs 11 situés de part et d'autre de la feuille métallique 1a sont distant d'une distance supérieure à 6 mm, par exemple d'une distance de 12,5 mm ou de 16,5 mm.

De plus, selon un mode de réalisation, la pluralité de premiers reliefs 11 est localisée à la surface de la feuille métallique à reliefs 1 selon un premier arrangement spatial périodique.

Par exemple, la pluralité de premiers reliefs 11 forme des protubérances réparties à la surface de la feuille métallique à reliefs 1a selon un arrangement spatial périodique défini selon une première et une seconde périodes spatiales. Ainsi, cet arrangement spatial n'est pas réductible à vue en coupe telle que représentée aux figures 1 et 2.

La première période spatiale est définie dans une première direction d'un plan moyen de la surface de la feuille métallique à reliefs et la seconde période spatiale est définie dans une seconde direction du plan moyen. Ces deux périodes spatiales peuvent être différentes l'une de l'autre.

Selon un mode de réalisation, les deux directions sont orthogonales entre elles.

Par exemple, les deux directions sont orthogonales entre elles et la première et/ou la seconde période spatiale est comprise entre 150 et 300 mm, par exemple elles sont de 240 mm.

De même, selon un mode de réalisation, la pluralité de seconds reliefs 12 présente la même hauteur. Par exemple, la hauteur des seconds reliefs 12 est comprise entre 3 et 15 mm. De même, cette hauteur correspond à la distance crête à crête, ou sommet à sommet, entre deux reliefs 12 situés de part et d'autre d'une feuille métallique à reliefs.

De plus, selon un mode de réalisation, la feuille métallique 1a présente sur ses deux faces une pluralité de seconds reliefs 12, de même hauteur ou non, comme illustré aux figures 1 et 2. Autrement dit, la pluralité de seconds reliefs 12 fait saillie par rapport aux deux faces de ladite feuille métallique à reliefs 1.

Selon un mode de réalisation préféré, la feuille métallique 1a présente sur ses deux faces une pluralité de seconds reliefs 12 de même hauteur comprise entre 3 et 15 mm, par exemple de 8 mm. Ainsi, deux sommets de seconds reliefs 12 situés de part et d'autre de la feuille métallique 1a sont distant d'une distance comprise entre 3 et 15 mm, par exemple de 8 mm.

Ces modes de réalisations sont combinables entre eux comme illustré à la figure 1 ou 2 : la feuille métallique à reliefs 1a présente sur ses deux faces une pluralité de premiers reliefs 11 de même hauteur supérieure à 6 mm et une pluralité de seconds reliefs 12 de même hauteur comprise entre 3 et 15 mm.

Selon un mode de réalisation, l'écart entre la première et la deuxième hauteur compris entre 4 et 10 mm.

De même, la pluralité de seconds reliefs 12 forme des protubérances réparties à la surface de la feuille métallique à reliefs selon un arrangement spatial périodique 1 défini selon une troisième et une quatrième périodes spatiales. De même, cet arrangement spatial n'est pas réductible à vue en coupe telle que représentée aux figures 1 et 2.

La troisième période spatiale est définie dans une troisième direction du plan moyen de la surface de la feuille métallique à reliefs et la quatrième période spatiale est définie dans une quatrième direction de ce plan moyen.

Les troisième et quatrième période spatiales peuvent être différentes l'une de l'autre.

Selon un mode de réalisation, ces troisièmes et quatrièmes directions sont orthogonales entre elles.

Par exemple, ces deux directions sont orthogonales entre elles et la première et/ou la seconde période spatiale est comprise entre 50 et 200 mm, par exemple de 80 mm.

Les feuilles métalliques de support 2 sont des feuille métalliques planes ou des feuilles métallique gaufrée obtenue par emboutissage (non illustrées).

A la figure 1 ou 2, les feuilles métalliques 2 (2a à 2f) sont des feuilles métalliques planes.

Les feuilles métalliques de support gaufrées présentent une unique pluralité de reliefs à leur surface. De plus, une hauteur de ces reliefs est inférieure à 5 mm. Cette hauteur correspond à la distance bord à bord entre deux gaufrages situés de part et d'autre d'une feuille métallique de support.

Au sein de l'enceinte 20, la pluralité de premiers reliefs 11 de chaque feuille métalliques à reliefs 1 est en appui contre une feuille métallique de support 2 adjacente à la feuille métallique à reliefs 1 comme illustré aux figures 1 et 2. Ainsi, la pluralité de premiers reliefs 11 permet de limiter le contact entre les feuilles métalliques 1 et 2. Ce faisant, les premiers reliefs 11 permettent de limiter les transfert thermiques par conduction entre deux feuilles métalliques 1 et 2 consécutives au sein de l'empilement.

Par exemple, les premiers reliefs 11 de la feuille métallique 1a sont en appui sur la feuille métallique de support 2a.

De même, les premiers reliefs 11 de la couche 1c sont en appui contre la feuille métallique de support 2b et contre la feuille métallique de support 2c.

De plus, les feuilles métalliques à reliefs 1 et les feuilles métalliques de support 2 sont fixées aux parois internes de l'enceinte métallique 20. Par exemple, toute la périphérie de chaque feuille métallique est soudée aux parois interne de l'enceinte métallique 20.

Ainsi, chaque paire de feuille métalliques à reliefs 1 et feuille métallique de support 2 - par exemple la paire (1c ;2c) forment une couche d'air au sein de l'enceinte 20.

L'empilement de feuilles métalliques 1 et 2 forment donc des couches d'air qui limitent les échanges thermiques par conduction puisque l'air un isolant thermique.

De plus, les seconds reliefs 12 de hauteur inférieure aux premiers reliefs 11 permettent de limiter les mouvements de l'air contenu dans chaque couche formée par une feuille métallique à reliefs 1, une feuille de support 2 et les parois de l'enceinte 20. Ainsi, les seconds reliefs 12 permettent de limiter le transfert thermique par convection.

### Procédé de fabrication

Nous allons maintenant décrire les étapes d'un procédé de fabrication d'un dispositif d'isolation thermique.

La première étape consiste à former une feuille métallique à reliefs 1 comprenant une pluralité de premiers reliefs 11 et une pluralité de seconds reliefs 12 à sa surface telle que celles décrites précédemment, par pressage de deux matrices de formage 30a et 30b d'une machine de presse contre une feuille métallique plane.

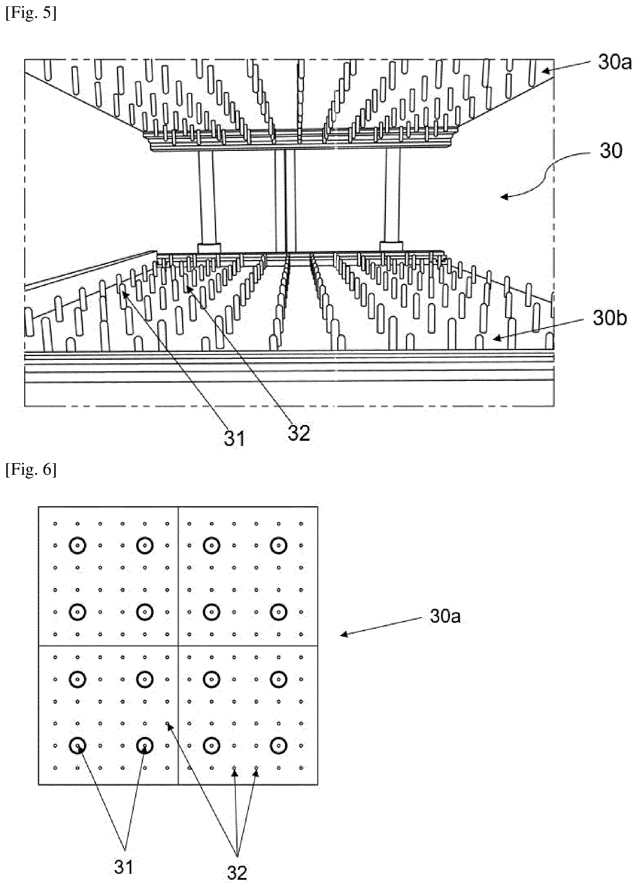

La figure 5 illustre une machine de presse 30 comprenant une matrice de formage supérieure 30a et une matrice de formage inférieure 30b.

Chaque matrice 30a et 30b comprend une pluralité de premiers picots 31 et une pluralité de seconds picots 32.

Ces deux matrices de pressage permettent de former une feuille métallique à reliefs 1 par pressage des deux matrices contre une feuille métallique plane à former.

La hauteur des premiers picots 31 détermine alors la hauteur des premiers reliefs 11 de la feuille métallique à reliefs 1 formée. De même, la hauteur des seconds picots 32 détermine la hauteur des seconds reliefs 12 de la feuille métallique à reliefs 1 formée.

Les premiers picots 31 ont une hauteur comprise entre 60 et 68 mm et les seconds picots 32 ont une hauteur comprise entre 50 et 60 mm.

La hauteur des picots 31 et 32 est mesurée par rapport au plan des matrices de pressage 30a et 30b.

Ainsi, en pressant simultanément, la feuille métallique plane à former, les matrices 30a et 30b forment à la surface de la feuille métallique une pluralité de premiers reliefs 11 et une pluralité de seconds reliefs 12. Autrement dit, la feuille métallique plane à former est prise en sandwich par les deux matrices de formage 30a et 30b.

La distance de mouvement des matrices (leur course) et les hauteurs des picots 31 et 32 déterminant les hauteurs respectivement les hauteurs des premiers et seconds reliefs 11 et 12, la feuille métallique à reliefs 1 comprend alors une pluralité de premiers reliefs 11 et une pluralité de seconds reliefs 12 de hauteur inférieure à la hauteur des premiers reliefs 11. En particulier, la hauteur des premiers et deuxièmes reliefs est déterminée par la position de fin de course des deux matrices. Cette positon de fin de course peut être pilotée par un automate programmable. Plus précisément, la hauteur des premiers reliefs est égale à la longueur du recouvrement mutuel entre les premiers picots 31 de la matrice 30a et les premiers picots 31 de la matrice 30b dans la position de fin de course des deux matrices. De même la hauteur des deuxièmes reliefs est égale à la longueur du recouvrement mutuel entre les seconds picots 32 de la matrice 30a et les seconds picots 32de la matrice 30b dans la position de fin de course des deux matrices, cette longueur de recouvrement étant nécessairement inférieure puisque les seconds picots 32 sont plus courts que les premiers picots 31. Plus précisément, la différence entre les deux longueurs de recouvrement, donc la différence entre les hauteurs des deux reliefs, est le double de la différence de longueur entre le second picot 32 et le premier picot 31.

De plus, selon un mode de réalisation, les premiers picots 31 sont répartis au sein des matrices de formage 30a et 30b selon un premier arrangement spatial périodique de sorte que les premiers reliefs 11 soient localisés à la surface de la feuille métallique à reliefs 1 selon ce premier arrangement spatial périodique.

Ce premier arrangement spatial périodique est défini selon deux périodes spatiales s'étendant chacune dans une direction non colinéaires l'une rapport à l'autre. Ces deux directions peuvent être orthogonales entre elles.

De même, selon un mode de réalisation, les seconds picots 32 sont répartis au sein des matrices de formage 30a et 30b selon un second arrangement spatial périodique de sorte que les seconds reliefs 12 soient localisés à la surface de la feuille métallique à reliefs 1 selon ce second arrangement spatial périodique.

De même, ce second arrangement spatial périodique est défini selon deux périodes spatiales s'étendant chacune dans une direction non colinéaires l'une rapport à l'autre. Ces deux directions peuvent être orthogonales entre elles.

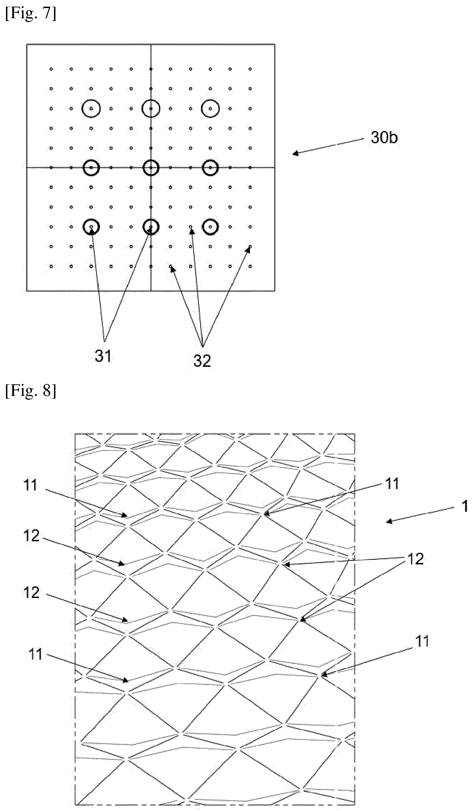

Les figures 6 et 7 illustrent une combinaison particulière de ces deux modes de réalisations : les arrangements périodiques sont chacun définis selon deux périodes spatiales et ces deux périodes spatiales présentent des directions orthogonales entre elles.

Selon un mode de réalisation, la feuille métallique plane à former est faite en acier inoxydable ce qui permet de la travailler à froid comme expliqué précédemment.

La figure 8 illustre schématiquement une feuille métallique à relief 1 formée par pressage des matrices 30a et 30b contre une feuille métallique plane.

La feuille métallique à relief 1 présente à sa surface des premiers reliefs 11 et des seconds reliefs 12 selon les arrangements spatiaux périodiques des picots 31 et 32 des matrices de formage 30a et 30b.

La face visible de la feuille métallique 1 permet de distinguer les reliefs 11 et 12 formant des bosses issus des picots 31 et 32 de la matrice inférieure 30a et les reliefs 11 et 12 formant des creux issus des picots 31 et 32 de la matrice supérieure 30b.

La seconde étape consiste à former une pluralité de feuille métallique à reliefs 1 par répétition de l'étape précédente. Une pluralité de feuilles à reliefs 1 peut ainsi être formée à partir d'une pluralité de feuille métallique plane à former et des matrices de formage 30a et 30b.

Enfin, la dernière étape consiste à, au sein d'une enceinte métallique 20, empiler successivement dans une direction d'épaisseur de l'enceinte métallique 20, les feuilles métalliques à reliefs 1 formées et une pluralité de feuilles métalliques de support 2 de sorte que les feuilles métalliques de support 2 soit disposées entre les feuilles métalliques à reliefs 1.

Tout moyen de fixation peut alors être utilisé pour fixer les feuilles métalliques aux parois de l'enceinte 20. Par exemple, il est possible de souder les feuilles métalliques aux parois de l'enceinte 20.

Suivant la performance thermique d'isolation, un nombre déterminé de feuilles métalliques 1 et 2 est empilé au sein de l'enceinte 20.

Les feuilles métalliques de support 2 peuvent être planes ou gaufrées suite à un emboutissage.

Selon un mode de réalisation, le gaufrage des feuilles métalliques de support 2 est réalisé par les matrices de la machine de presse équipées d'une pluralité de picots d'une unique hauteur. Généralement, la course de déplacement des matrices pour réaliser le gaufrage est plus courte que celle prévue pour réaliser les premiers reliefs 11 et les seconds reliefs 12.

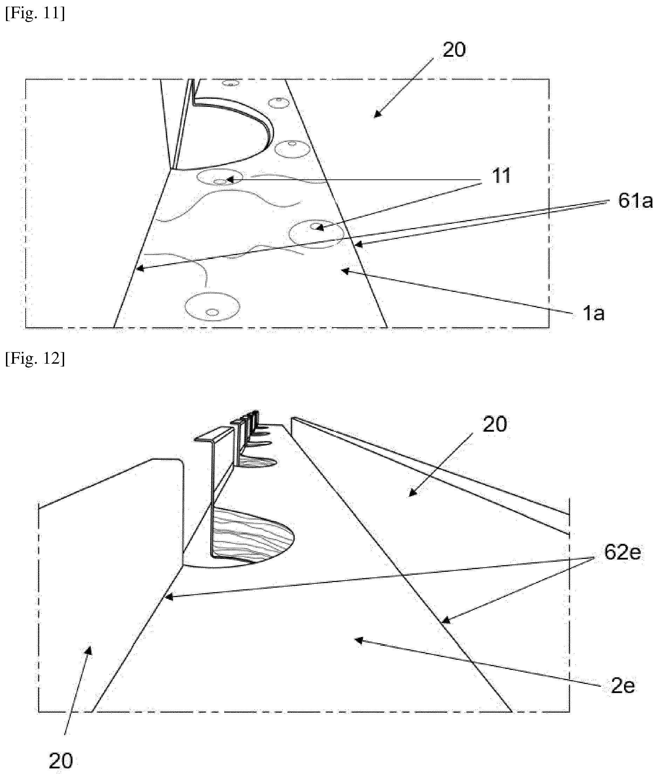

Les figures 9 et 11 illustrent l'empilement d'une feuille métalliques à reliefs 1a au sein d'une enceinte 20 selon deux modes de réalisations différents : les dimensions et la géométrie de l'enceinte 20 ne sont pas les mêmes, les dimensions et la forme des feuilles métalliques à reliefs 1 sont différents également différents également.

La feuille métallique à reliefs 1a est fixée aux parois internes de l'enceinte métallique 20 par soudure par points de portions de sa périphérie aux parois interne de l'enceinte métallique 20. La ligne de soudure 61a indique le lieu de cette soudure.

A la figure 9, les traces 63 des futures lignes de soudure sont repérées, sur les parois de l'enceinte métallique 20.

Les figures 10 et 12 illustrent elles l'empilement d'une feuille métallique de support 2e au sein des enceintes 20 respectivement illustrées aux figures 9 et 11 : ici aussi, les feuilles de support 2 ne sont pas de même dimensions ni de même forme.

De même, une ligne de soudure 62e est visible aux figures 10 et 12.

### Exemples

Nous allons à présent décrire deux exemples différents du dispositif d'isolation thermique 100.

Dans le premier exemple, le dispositif thermique 100 est doté d'une enceinte 20 de forme cylindrique, par exemple analogue aux figures 9 et 10, fabriquée dans un alliage d'acier inoxydable F17/304.

Ses dimensions sont les suivantes :
- Diamètre intérieur = 3604mm
- Diamètre extérieur = 4083mm
- Epaisseur de l'enceinte 20 du dispositif 100 = 240mm
- Hauteur de l'enceinte 20 du dispositif 100 = 693mm

Les feuilles métalliques à reliefs 1 comprennent des premiers reliefs 11 d'une hauteur de 16.5 mm et des seconds reliefs 12 d'une hauteur de 10 mm obtenus avec les paramètres de machine de presse suivants :
La première matrice de formage 30a et la seconde matrice de formage sont de forme carrée de longueur 1000 mm.

La première matrice de formage 30a comprend neuf premiers picots 31 présentant une hauteur de 61,5 mm, 64,5 mm et 66,5 mm. Ils sont répartis au sein de la matrice selon un motif périodique carré de 240 mm de côté et formant quatre carrés de 240 mm de côté. Par ligne, ils mesurent 66,5 mm, 64,5 mm et 61,5 mm. Autrement dit, les premiers picots 31 sont répartis au sein de la première matrice de formage selon un arrangement spatial présentant deux périodes spatiales de 240 mm s'étendant le long de deux directions orthogonales.

Les seconds picots 32 ont une hauteur 60 mm et sont répartis au sein de la matrice de formage selon un motif périodique carré de 80 mm de côté. Autrement dit, les seconds picots 32 sont répartis au sein de la première matrice de formage selon un arrangement spatial présentant deux périodes spatiales de 80 mm s'étendant le long de deux directions orthogonales. Il y a 112 second picots 32.

La seconde matrice de formage comprend 16 premiers picots répartis 31 selon le même motif périodique carré de 240 mm de côté, et 105 seconds picots 32 répartis selon le même motif périodique carrée de 80 mm de côté.

Les 16 premiers picots 31 forment quatre lignes de hauteurs respectives 66,5 mm, 64,5 mm, 63 mm et 61,5 mm et les seconds picots 32 présentent une hauteur de 60 mm.

Le dispositif d'isolation selon le premier exemple a fait l'objet d'un test de performance d'isolation thermique dans les conditions suivantes :
- Température ambiante = 40°C
- Température de chauffe = 325°C
- Dispositif 100 en position horizontale

Toutes les hauteurs présentées sont définies par rapport à la surface de chaque matrice.

Les feuilles métalliques de support 2 utilisée sont des feuilles métalliques gaufrée.

Les résultats sont les suivants :
- Flux thermique mesuré au centre de la paroi externe du dispositif 100 : 4,77. 10⁻² W/(m.K)
- Flux thermique moyen: 6,4. 10⁻² W/(m.K)

Dans le second exemple, le dispositif thermique 100 est doté d'une enceinte 20 de forme générale cylindrique, par exemple analogue à la figure 3, fabriquée dans un alliage d'acier inoxydable F17/304.

Les dimensions sont les suivantes :
- Diamètre intérieur = 3604mm
- Diamètre extérieur = 4083mm
- Epaisseur de l'enceinte 20 du dispositif 100 = 240mm
- Hauteur de l'enceinte 20 du dispositif 100 = 693mm

Les feuilles métalliques à reliefs 1 comprennent des premiers reliefs 11 d'une hauteur de 12.5 mm et des seconds reliefs 12 d'une hauteur de 7.5 mm obtenus avec les paramètres de machine de presse suivants :
La même machine de presse utilisée est la même.

La première matrice de formage comprend 16 premiers picots répartis 31 selon le un motif périodique carré de 240 mm de côté, et 105 seconds picots 32 répartis selon le motif périodique carrée de 80 mm de côté.

Les premiers picots 31 ont une hauteur de 65 mm et 63 mm. Seule la première ligne de premiers picots présentent une hauteur de 65 mm. Les seconds picots 32 ont une hauteur de 60 mm.

La seconde matrice de formage neuf premiers picots 31 présentant une hauteur de 65 mm et 63 mm. Ils sont répartis au sein de la matrice selon un motif périodique carré de 240 mm de côté et formant quatre carrés de 240 mm de côté. Par ligne de trois, ils mesurent 65 mm, 63 mm et 63 mm. Autrement dit, les premiers picots 31 sont répartis au sein de la première matrice de formage selon un arrangement spatial présentant deux périodes spatiales de 240 mm s'étendant le long de deux directions orthogonales.

Les conditions initiales du test de performance d'isolation thermique étaient les suivantes :
- Température ambiante = 40°C
- Température de chauffe = 323°C
- Dispositif 100 en position horizontale

Toutes les hauteurs présentées sont définies par rapport à la surface de chaque matrice.

Les feuilles métalliques de support 2 utilisée sont des feuilles métalliques gaufrée.

Les résultats sont les suivants :
- Flux thermique mesuré au centre de la paroi externe du dispositif 100 : 6,36.10⁻² W/(m/K)
- Flux thermique moyen: 8,54. 10⁻² W/(m/K)

### Utilisation

Les figures 13 et 14 illustrent des systèmes physiques à isoler de formes et dimensions différentes.

Les dispositifs 100 peuvent être utilisés pour isoler de tels systèmes physiques.

Par exemple, la figure 13 illustre une enceinte à isoler équipée de dispositifs d'isolation thermique 100. L'enceinte est un cylindre fermé par une coque hémisphérique. Chaque dispositif d'isolation 100 couvre une portion de surface correspondant à un secteur angulaire autour de l'axe de symétrie du cylindre. Les dispositifs d'isolation 100 ont le même rayon de courbure que la portion de cylindre recouverte.

Par exemple, la figure 14 illustre une pluralité de tuyaux faisant partie d'une portion de tuyauterie. Une telle tuyauterie peut être installée dans une installation destinée à la production d'énergie, comprenant au moins un réacteur nucléaire. Dans de telles installations, les températures générées peuvent être très élevées. Ainsi, les tuyauteries de telles installations sont alors équipées de plusieurs dispositifs d'isolation thermique 100 ayant une forme demi-cylindre droit tels qu'illustrés aux figures 3 ou 4, ou de quarts-de-cylindre droit.

### Autres

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Dispositif d'isolation thermique (100) comprenant :
- une enceinte métallique (20), et,
- plusieurs feuilles métalliques (1 ; 2) empilées successivement dans une direction d'épaisseur (E) de l'enceinte métallique (20),
les feuilles métalliques comprenant :
- des feuilles métalliques à reliefs (1) ;
- des feuilles métalliques de support (2) disposées entre les feuilles métalliques à reliefs ;
chaque feuille métallique à reliefs (1) présentant une pluralité de premiers reliefs (11) présentant une première hauteur selon la direction d'épaisseur (E), les premiers reliefs (11) étant en appui contre une feuille métallique de support (2) adjacente à la feuille métallique à reliefs (1),
**caractérisé en ce que**
chaque feuille métallique à reliefs (1) présente une pluralité de deuxièmes reliefs (12) présentant une deuxième hauteur selon la direction d'épaisseur (E) ;
la première hauteur étant supérieure à la deuxième hauteur.

2. Dispositif d'isolation thermique (100) selon la revendication précédente, dans lequel la pluralité de premiers reliefs (11) fait saillie par rapport aux deux faces de ladite feuille métallique à reliefs (1) et la pluralité de seconds reliefs (12) fait saillie par rapport aux deux faces de ladite feuille métallique à reliefs (1).

3. Dispositif d'isolation thermique (100) selon l'une quelconque des revendications précédentes, dans lequel la pluralité de premiers reliefs (11) est localisée à la surface de la feuille métallique à reliefs (1) selon un premier arrangement spatial périodique; et/ou la pluralité de deuxièmes reliefs (12) est localisée à la surface de la feuille métallique à reliefs (1) selon un deuxième arrangement spatial périodique.

4. Dispositif d'isolation thermique (100) selon la revendication précédente dans lequel la pluralité de premiers reliefs (11) forme des protubérances réparties à la surface de la feuille métallique à reliefs selon un arrangement spatial périodique défini selon une première et une seconde périodes spatiales ;
la première période spatiale étant définie dans une première direction d'un plan moyen de la surface de la feuille métallique à reliefs ; et
la seconde période spatiale étant définie dans une seconde direction du plan moyen ; et/ou
la pluralité de seconds reliefs (12) forme des protubérances réparties à la surface de la feuille métallique à reliefs selon un arrangement spatial périodique (1) défini selon une troisième et une quatrième périodes spatiales ; la troisième période spatiale étant définie dans la première direction du plan moyen de la surface de la feuille métallique à reliefs ; et la quatrième période spatiale étant définie dans la seconde direction du plan moyen.

5. Dispositif d'isolation thermique (100) selon l'une quelconque des revendications précédentes dans lequel la première hauteur est supérieure à 6 mm et inférieure à 30 mm.

6. Dispositif d'isolation thermique (100) selon l'une quelconque des revendications précédentes dans lequel la deuxième hauteur est comprise entre 3 et 15 mm.

7. Dispositif d'isolation thermique (100) selon l'une quelconque des revendications précédentes dans lequel la feuille métallique de support (2) est une feuille métallique plane ou une feuille métallique gaufrée.

8. Dispositif d'isolation thermique (100) selon l'une quelconque des revendications précédentes dans lequel l'enceinte métallique (20), la feuille métallique à relief (1) et/ou la feuille métallique de support (2) est réalisée en acier inoxydable.

9. Dispositif d'isolation thermique (100) selon l'une quelconque des revendications précédentes dans lequel une épaisseur de la feuille métallique à relief (1) et/ou la feuille métallique de support (2) est comprise entre 0.01 et 0.10 millimètres.

10. Dispositif d'isolation thermique (100) selon l'une quelconque des revendications précédentes dans lequel les feuilles métalliques à reliefs (1) sont soudées à au moins une paroi de l'enceinte métallique (20); et/ou
les feuilles métalliques de support (2) sont soudées à au moins une paroi de l'enceinte métallique (20).

11. Dispositif d'isolation thermique (100) selon l'une quelconque des revendications précédentes comprenant de 5 à 30 feuilles métalliques (1;2), de préférence entre 10 et 20 feuilles métalliques.

12. Dispositif d'isolation thermique (100) selon l'une quelconque des revendications précédentes présentant une épaisseur selon la direction d'épaisseur de l'enceinte (20) comprise entre 30 et 250 mm.

13. Installation destinée à la production d'énergie, comprenant au moins un réacteur nucléaire et un dispositif d'isolation thermique selon l'une quelconque des revendications précédentes agencé pour isoler un composant du réacteur nucléaire.

14. Procédé de fabrication d'un dispositif d'isolation thermique (100), le procédé comprenant :
former une pluralité de feuilles métalliques à reliefs (1), chacune desdites feuilles métalliques à reliefs comprenant une pluralité de premiers reliefs (11) et une pluralité de seconds reliefs (12) à sa surface et étant obtenue par pressage de deux matrices de formage (30a ;30b) contre une feuille métallique plane, les matrices de formage (30a ; 30b) comprenant une pluralité de premiers picots (31) et une pluralité de seconds picots (32), une hauteur des premiers picots (31) étant supérieure à une hauteur des seconds picots (32) ; la hauteur des premiers picots (31) déterminant la hauteur des premiers reliefs (11) ; et la hauteur des seconds picots (32) déterminant la hauteur des seconds reliefs (12) de sorte que une hauteur des premiers reliefs (11) soit supérieure à une hauteur des seconds reliefs ;
au sein d'une enceinte métallique (20), empiler successivement dans une direction d'épaisseur de l'enceinte métallique (20), les feuilles métalliques à reliefs (1) et une pluralité de feuilles métalliques de support (2) de sorte que les feuilles métalliques de support (2) soit disposées entre les feuilles métalliques à reliefs (1).

15. Procédé de fabrication selon la revendication précédente dans lequel les premiers picots (31) sont répartis au sein des matrices de formage (30a ; 30b) selon un premier arrangement spatial périodique de sorte que les premiers reliefs (11) soient localisés à la surface de la feuille métallique à reliefs (1) selon ce premier arrangement spatial périodique;
et/ou les seconds picots (32) sont répartis au sein des matrices de formage (30a ; 30b) selon un second arrangement spatial périodique de sorte que les seconds reliefs (12) soient localisés à la surface de la feuille métallique à reliefs (1) selon ce second arrangement spatial périodique.

## Patentansprüche

1. Wärmedämmvorrichtung (100), umfassend:
- ein Metallgehäuse (20) und
- mehrere Metallfolien (1, 2), die nacheinander in einer Dickenrichtung (E) des Metallgehäuses (20) gestapelt sind,
wobei die Metallfolien umfassen:
- geprägte Metallfolien (1),
- Stützmetallfolien (2), die zwischen den geprägten Metallfolien angeordnet sind,
wobei jede geprägte Metallfolie (1) eine Vielzahl von ersten Reliefs (11) mit einer ersten Höhe in Dickenrichtung (E) aufweist, wobei die ersten Reliefs (11) an einer Stützmetallfolie (2) anliegen, die zur geprägten Metallfolie (1) benachbart ist,
**dadurch gekennzeichnet, dass**
jede Reliefmetallfolie (1) eine Vielzahl von zweiten Reliefs (12) aufweist, die eine zweite Höhe in Richtung der Dicke (E) aufweisen,
wobei die erste Höhe größer als die zweite Höhe ist.

2. Wärmedämmvorrichtung (100) nach dem vorhergehenden Anspruch, wobei die Vielzahl von ersten Reliefs (11) aus beiden Seiten der genannten geprägten Metallfolie (1) hervorstehen und die Vielzahl von zweiten Reliefs (12) aus beiden Seiten der genannten geprägten Metallfolie (1) hervorstehen.

3. Wärmedämmvorrichtung (100) nach einem der vorstehenden Ansprüche, wobei die Vielzahl von ersten Reliefs (11) auf der Oberfläche der geprägten Metallfolie (1) in einer ersten periodischen räumlichen Anordnung angeordnet ist, und/oder die Vielzahl von zweiten Reliefs (12) auf der Oberfläche der geprägten Metallfolie (1) in einer zweiten periodischen räumlichen Anordnung angeordnet ist.

4. Wärmedämmvorrichtung (100) gemäß dem vorhergehenden Anspruch, wobei die Vielzahl von ersten Reliefs (11) Vorsprünge bildet, die auf der Oberfläche der geprägten Metallfolie in einer periodischen räumlichen Anordnung verteilt sind, die durch eine erste und eine zweite räumliche Periode definiert ist,
wobei die erste räumliche Periode in einer ersten Richtung einer mittleren Ebene der Oberfläche der geprägten Metallfolie definiert ist, und
wobei die zweite räumliche Periode in einer zweiten Richtung der mittleren Ebene definiert ist, und/oder
die Vielzahl von zweiten Reliefs (12) Vorsprünge bildet, die auf der Oberfläche der geprägten Metallfolie in einer periodischen räumlichen Anordnung (1) verteilt sind, die durch eine dritte und eine vierte räumliche Periode definiert ist, wobei die dritte räumliche Periode in der ersten Richtung der mittleren Ebene der Oberfläche der geprägten Metallfolie definiert ist, und wobei die vierte räumliche Periode in der zweiten Richtung der mittleren Ebene definiert ist.

5. Wärmedämmvorrichtung (100) nach einem der vorstehenden Ansprüche, wobei die erste Höhe größer als 6 mm und kleiner als 30 mm ist.

6. Wärmedämmvorrichtung (100) nach einem der vorstehenden Ansprüche, wobei die zweite Höhe zwischen 3 und 15 mm liegt.

7. Wärmedämmvorrichtung (100) nach einem der vorstehenden Ansprüche, wobei die Stützmetallfolie (2) eine flache Metallfolie oder eine geprägte Metallfolie ist.

8. Wärmedämmvorrichtung (100) nach einem der vorstehenden Ansprüche, wobei das Metallgehäuse (20), die geprägte Metallfolie (1) und/oder die Stützmetallfolie (2) aus rostfreiem Stahl hergestellt sind.

9. Wärmedämmvorrichtung (100) nach einem der vorstehenden Ansprüche, wobei die Dicke der geprägten Metallfolie (1) und/oder der Stützmetallfolie (2) zwischen 0,01 und 0,10 Millimetern liegt.

10. Wärmedämmvorrichtung (100) nach einem der vorstehenden Ansprüche, wobei die geprägten Metallfolien (1) an mindestens eine Wand des Metallgehäuses (20) geschweißt sind, und/oder die Stützmetallfolien (2) an mindestens eine Wand des Metallgehäuses (20) geschweißt sind.

11. Wärmedämmvorrichtung (100) nach einem der vorstehenden Ansprüche, umfassend 5 bis 30 Metallfolien (1, 2), vorzugsweise zwischen 10 und 20 Metallfolien.

12. Wärmedämmvorrichtung (100) nach einem der vorstehenden Ansprüche mit einer Dicke in Richtung der Dicke des Gehäuses (20) zwischen 30 und 250 mm.

13. Anlage zur Energieerzeugung, umfassend mindestens einen Kernreaktor und eine Wärmedämmvorrichtung nach einem der vorstehenden Ansprüche, die zur Isolierung einer Komponente des Kernreaktors ausgelegt ist.

14. Verfahren zur Herstellung einer Wärmedämmsvorrichtung (100), wobei das Verfahren umfasst:
- Bilden einer Vielzahl von geprägten Metallfolien (1), wobei jede der geprägten Metallfolien eine Vielzahl von ersten Reliefs (11) und eine Vielzahl von zweiten Reliefs (12) auf seiner Oberfläche aufweist und durch Pressen von zwei Formmatrizen (30a, 30b) gegen eine flaches Metallfolie erhalten wird, wobei die Formmatrizen (30a, 30b) eine Vielzahl von ersten Stiften (31) und eine Vielzahl von zweiten Stiften (32) aufweisen, wobei die Höhe der ersten Stifte (31) größer ist als die Höhe der zweiten Stifte (32), wobei die Höhe der ersten Stifte (31) die Höhe der ersten Erhebungen (11) bestimmt und die Höhe der zweiten Stifte (32) die Höhe der zweiten Erhebungen (12) bestimmt, so dass die Höhe der ersten Erhebungen (11) größer ist als die Höhe der zweiten Erhebungen,
- sukzessives Stapeln der geprägten Metallfolien und einer Vielzahl von Stützmetallfolien innerhalb eines Metallgehäuses (20) in Richtung der Dicke des Metallgehäuses (20) so, dass die Stützmetallfolien (2) zwischen den geprägten Metallfolien(1) angeordnet sind.

15. Verfahren zur Herstellung nach dem vorstehenden Anspruch, bei dem die ersten Stifte (31) innerhalb der Formmatrizen (30a, 30b) in einer ersten periodischen räumlichen Anordnung derart verteilt sind, dass die ersten Reliefs (11) an der Oberfläche der geprägten Metallfolie (1) in dieser ersten periodischen räumlichen Anordnung angeordnet sind,
- und/oder die zweiten Stifte (32) innerhalb der Formmatrizen (30a, 30b) in einer zweiten periodischen räumlichen Anordnung derart verteilt sind, dass die zweiten Reliefs (12) auf der Oberfläche der geprägten Metallfolie (1) in dieser zweiten periodischen räumlichen Anordnung angeordnet sind.

## Claims

1. Thermal insulation device (100) comprising:
- a metal enclosure (20), and,
- several metal sheets (1; 2) stacked successively in a direction of thickness (E) of the metal enclosure (20),
the metal sheets comprising:
- metal sheets with raised elements (1);
- supporting metal sheets (2) disposed between the metal sheets with raised elements;
each metal sheet with raised elements (1) having a plurality of first raised elements (11) having a first height along the direction of thickness (E), the first raised elements (11) bearing against a supporting metal sheet (2) adjacent to the metal sheet with raised elements (1),
**characterized in that** each metal sheet with raised elements (1) has a plurality of second raised elements (12) having a second height along the direction of thickness (E);
the first height being greater than the second height.

2. Thermal insulation device (100) according to the preceding claim, wherein the plurality of first raised elements (11) projects with respect to the two faces of said metal sheet with raised elements (1) and the plurality of second raised elements (12) projects with respect to the two faces of said metal sheet with raised elements (1).

3. Thermal insulation device (100) according to any one of the preceding claims, wherein the plurality of first raised elements (11) is localised on the surface of the metal sheet with raised elements (1) according to a first periodic spatial arrangement; and/or the plurality of second raised elements (12) is localised on the surface of the metal sheet with raised elements (1) according to a second periodic spatial arrangement.

4. Thermal insulation device (100) according to the preceding claim, wherein the plurality of first raised elements (11) forms protuberances distributed on the surface of the metal sheet with raised elements according to a periodic spatial arrangement defined according to a first and a second spatial period;
the first spatial period being defined in a first direction of an average plane of the surface of the metal sheet with raised elements; and
the second spatial period being defined in a second direction of the average plane; and/or
the plurality of second raised elements (12) forms protuberances distributed on the surface of the metal sheet with raised elements according to a periodic spatial arrangement defined according to a third and a fourth spatial period; the third spatial period being defined in the first direction of the average plane of the surface of the metal sheet with raised elements; and the fourth spatial period being defined in the second direction of the average plane.

5. Thermal insulation device (100) according to any one of the preceding claims, wherein the first height is greater than 6mm and less than 30mm.

6. Thermal insulation device (100) according to any one of the preceding claims, wherein the second height is between 3 and 15mm.

7. Thermal insulation device (100) according to any one of the preceding claims, wherein the supporting metal sheet (2) is a flat metal sheet or an embossed metal sheet.

8. Thermal insulation device (100) according to any one of the preceding claims, wherein the metal enclosure (20), the metal sheet with raised elements (1) and/or the supporting metal sheet (2) is made of stainless steel.

9. Thermal insulation device (100) according to any one of the preceding claims, wherein a thickness of the metal sheet with raised elements (1) and/or the supporting metal sheet (2) is between 0.01 and 0.10 millimetres.

10. Thermal insulation device (100) according to any one of the preceding claims, wherein the metal sheets with raised elements (1) are welded to at least one wall of the metal enclosure (20); and/or
the supporting metal sheets (2) are welded to at least one wall of the metal enclosure (20).

11. Thermal insulation device (100) according to any one of the preceding claims comprising 5 to 30 metal sheets (1; 2), preferably between 10 and 20 metal sheets.

12. Thermal insulation device (100) according to any one of the preceding claims having a thickness along the direction of thickness of the enclosure (20) of between 30 and 250mm.

13. Installation intended for energy production, comprising at least one nuclear reactor and one thermal insulation device according to any one of the preceding claims arranged to insulate a component of the nuclear reactor.

14. Method for manufacturing a thermal insulation device (100), the method comprising:
forming a plurality of metal sheets with raised elements (1), each of said metal sheets with raised elements comprising a plurality of first raised elements (11) and a plurality of second raised elements (12) on its surface and being obtained by pressing two forming dies (30a; 30b) against a flat metal sheet, the forming dies (30a; 30b) comprising a plurality of first pins (31) and a plurality of second pins (32), a height of the first pins (31) being greater than a height of the second pins (32); the height of the first pins (31) determining the height of the first raised elements (11); and the height of the second pins (32) determining the height of the second raised elements (12), such that a height of the first raised elements (11) is greater than a height of the second raised elements;
within a metal enclosure (20), stacking successively in a direction of thickness of the metal enclosure (20), the metal sheets with raised elements (1) and a plurality of supporting metal sheets (2), such that the supporting metal sheets (2) is disposed between the metal sheets with raised elements (1).

15. Manufacturing method according to the preceding claim, wherein the first pins (31) are distributed within forming dies (30a; 30b) according to a first periodic spatial arrangement, such that the first raised elements (11) are localised on the surface of the metal sheet with raised elements (1) according to this first periodic spatial arrangement;
and/or the second pins (32) are distributed within forming dies (30a; 30b) according to a second periodic spatial arrangement, such that the second raised elements (12) are localised on the surface of the metal sheet with raised elements (1) according to this second periodic spatial arrangement.
